# EUROPÄISCHE PATENTANMELDUNG

(11) **EP 1 429 241 A1**
(43) Veröffentlichungstag der Anmeldung: **16.06.2004**
(21) Anmeldenummer: 03011452.4
(22) Anmeldetag: 20.05.2003
(51) Int. Cl.: G06F 9/44

(54) **Verfahren und Vorrichtung zur Portierung von Softwareprogrammen auf eine Zielplattform mittels einer EDV-Anlage**

(30) Priorität: 09.12.2002 EP 02027432
(71) Anmelder: SIEMENS AKTIENGESELLSCHAFT, 80333 München (DE)
(72) Erfinder: Humpert, Hans-Dieter, 91334 Hemhofen (DE); Kleyer, Dieter, 91074 Herzogenaurach (DE)

(57) **Zusammenfassung**

Bei einem erfindungsgemäßen Verfahren wird aus einem plattformunabhängigen, technologischen Funktionsplan ein erster Funktionsplan (7) erstellt und aus letzterem in einem anschließenden Schritt ein zweiter Funktionsplan (25) generiert, welcher an spezifische Anforderungen der Zielplattform angepasst ist. Schließlich wird mittels des zweiten Funktionsplans (25) im Wesentlichen automatisch ein Softwareprogramm (31) für die Zielplattform generiert.
Eine entsprechende Vorrichtung (1) umfasst eine Einleseeinheit (5) zum Einlesen des ersten Funktionsplans (7), und eine Speichereinheit (9) mit einer Regelbasis (11), um mindestens einen plattformunabhängigen Port (13,15) und/oder Parameter und/oder Funktionsbaustein (17) des ersten Funktionsplans (7) überzuführen in mindestens einen weiteren Port (19,21) und/oder weiteren Parameter und/oder weiteren Funktionsbaustein (23) des zweiten Funktionsplans (25). Der zweite Funktionsplan (25) wird dabei von einer Verarbeitungseinheit (27) mittels der Regelbasis (11) und des ersten Funktionsplans (7) erzeugt.
Bei einem erfindungsgemäßen Verfahren bzw. Vorrichtung ist der Grad an Wiederverwertbarkeit einer einmal erdachten technologischen Lösung bei einem Wechsel der Zielplattform besonders hoch.

## Beschreibung

Die Erfindung betrifft EDV-basiertes Verfahren sowie eine Vorrichtung zur Portierung von Softwareprogrammen auf eine Zielplattform.

Im Zuge eines zunehmenden internationalen Wettbewerbs in nahezu allen Wirtschaftszweigen kommt dem Automatisierungsgrad von technischen Anlagen immer mehr Bedeutung zu, da damit nicht nur die Zuverlässigkeit und Qualität verschiedenster verfahrenstechnischer Prozesse, sondern auch deren Realisierungskosten günstig beeinflusst werden können.

Dies führt zu einer zunehmend stärkeren Nutzung von EDV-Anlagen, deren Hard- und Softwarekomponenten einem immer kürzer werdenden Innovationszyklus unterworfen sind. Des Weiteren ist eine Tendenz zu beobachten, ehemals speziell für bestimmte verfahrenstechnische Aufgaben konstruierte EDV-Anlagen zu ersetzen durch Standard-Komponenten, beispielsweise Personal Computer, welche weit verbreitet sind und im einschlägigen Fachhandel bezogen werden können.

Im Zuge der Modernisierung beispielsweise eines Prozessleitsystems einer technischen Anlage tritt dann zunehmend das Problem auf, die auf dem Prozessleitsystem installierte und auf dessen spezielle Erfordernisse abgestimmte Software auf eine modernisierte EDV-Anlage zu portieren, welche andere Anforderungen an die Lauffähigkeit der Software stellt.

Dabei treten insbesondere dann Schwierigkeiten auf, wenn eine veraltete, prozessnahe Komponente gegen eine neue, dazu nicht kompatible Komponente ausgetauscht wird. Dann sind die auf dieser veralterten Komponente laufenden Softwareprogramme in der Regel praktisch vollständig neu zu erstellen, was einen beträchtlichen Aufwand erfordert.

Um dieses Problem zu überwinden, ist es bekannt, Anwendungsprogramme in einem sogenannten "Pseudo-Code" zu erstellen, welcher der Struktur eines Computerprogramms nachgebildet ist, aber nicht dessen spezielle Hard- und Softwareanforderungen einer bestimmten Zielplattform beinhaltet. Dieser Pseudo-Code beschreibt somit eine von einem Softwareprogramm zu bearbeitende technische Aufgabe in allgemeiner, softwarenaher Form und kann als Grundlage für die Erstellung von entsprechenden Softwareprogrammen ausgewählter Zielplattformen verwendet werden.

Nachteilig dabei ist, dass wegen der software-nahen Darstellung der technischen Problemlösung die Übersichtlichkeit für den projektierenden Ingenieur stark eingeschränkt ist. Des Weiteren müssen bei der Portierung eines derartigen Pseudo-Codes auf eine spezielle Zielplattform meistens doch zahlreiche Modifikationen vorgenommen werden, um einen auf der Zielplattform ablauffähigen Programmcode zu erhalten. Dadurch ist der Grad an Wiederverwertbarkeit dieses Pseudo-Codes stark eingeschränkt.

Der Erfindung liegt daher die Aufgabe zugrunde, ein verbessertes Verfahren so wie eine Vorrichtung zur Portierung von Softwareprogrammen auf eine Zielplattform mittels einer EDV-Anlage anzugeben. Dabei soll es insbesondere möglich sein, einmal erdachte technische Problemlösungen mit möglichst wenig Änderungsaufwand auf eine neue Zielplattform zu portieren.

Bezüglich des Verfahrens wird die Aufgabe erfindungsgemäß gelöst durch ein Verfahren zur Portierung von Softwareprogrammen auf eine Zielplattform mittels einer EDV-Anlage mit folgenden Schritten:
1. Für eine mittels eines Softwareprogramms zu bearbeitende Aufgabe wird ein plattformunabhängiger, technologischer Funktionsplan als ein erster Funktionsplan erstellt.
2. Mittels des ersten Funktionsplans wird ein zweiter Funktionsplan erstellt, welcher an spezifische Anforderungen der Zielplattform angepasst ist.
3. Mittels des zweiten Funktionsplans wird das Softwareprogramm für die Zielplattform erzeugt.

Die Erfindung geht dabei im Unterschied zu den vorher erwähnten bekannten Methoden des Pseudo-Codes von der graphischen Darstellung einer technischen Problemlösung aus, welche keinen Bezug zu einer speziellen Hard- und/oder softwareplattform beinhaltet. Dieser erste Funktionsplan umfasst die technischen Prozessparameter, die Verknüpfung der im Prozess entstehenden Signale und die verwendeten Regelungsalgorithmen.

Dieser erste Funktionsplan ist eine für den Fachmann übersichtliche, graphische Darstellung einer technischen Problemlösung und ist nicht (im Gegensatz zu Pseudo-Code) an die Struktur eines Softwareprogramms angelehnt.

So ist es möglich, beispielsweise aus Gründen der Qualitätssicherung, eines effizienten Engineering und einer wirtschaftlichen Inbetriebnahme, technische Problemlösungen für technische Anlagen in allgemeiner Form mittels erster Funktionspläne zu erstellen, welche bei weiteren, ähnlichen technischen Anlagen praktisch unverändert wiederverwendet werden können.

Um ein auf der Zielplattform ablauffähiges Softwareprogramm zu erhalten, wird im zweiten Schritt des Verfahrens ein zweiter Funktionsplan erstellt, welcher die spezifischen Hard- und Softwareerfordernisse der Zielplattform beinhaltet, so dass die mittels des ersten Funktionsplans formulierte technische Problemlösung als Softwareprogramm auf der Zielplattform ablaufen kann; dazu wird im dritten Schritt des Verfahrens mittels des zweiten Funktionsplans das Softwareprogramm erzeugt. Da der zweite Funktionsplan die speziellen Anforderungen für die Ablauffähigkeit des Softwareprogramms auf der Zielplattform beinhaltet, kann die Umsetzung des zweiten Funktionsplans - welcher eine graphische Darstellung der vom ersten Funktionsplan umfassten technischen Problemlösung bezüglich der gewählten Zielplattform beinhaltet - im Wesentlichen automatisch erfolgen. Es ist dazu beispielsweise lediglich ein Interpreter notwendig, welcher die im zweiten Funktionsplan enthaltenen Informationen in Softwarecode umsetzt, welcher auf der Zielplattform ablauffähig ist.

Da bei den meisten technischen Anlagen die realisierte technologiespezifische Funktionalität, also die von der eingesetzten Hardware unabhängige Problemlösung, überwiegt, ist mittels eines erfindungsgemäßen Verfahrens der Grad an Wiederverwertbarkeit einmal erdachter technischer Problemlösungen besonders hoch. Derartige technologische Funktionen beinhalten beispielsweise die Steuerung von Pumpen, Ventilen, Motoren oder An- und Abfahrprogramme mit Hilfe von Schrittsteuerungen, oder realisieren Regelungsfunktionen. Diese Funktionalität, welche bei den meisten technischen Anlagen den überwiegenden Teil der Automatisierungssoftware ausmacht, wird nahezu ausschließlich durch die technologische Aufgabenstellung bestimmt. Die ersten Funktionspläne werden beispielsweise mittels graphischer Editoren erstellt, wobei Funktionsbausteine in einem Arbeitsbereich platziert, parametriert und verschaltet werden. Die Funktionsbausteine umfassen dabei ausschließlich durch die technologische Aufgabenstellung bestimmte technologische Parameter und Schnittstellen/Anschlüsse (Ports).

Auf Basis dieses oder der ersten Funktionspläne werden anschließend der oder die zweiten Funktionspläne erzeugt, welche nun an die spezifischen, insbesondere hardwaremäßigen, Anforderungen der Zielplattform angepasst sind, so dass die Umsetzung des zweiten Funktionsplans in ein entsprechendes Softwareprogramm, welches auf der Zielplattform ablauffähig ist, keine Schwierigkeiten bereitet.

Somit ist es möglich, wertvolles technologisches Wissen mittels des oder der ersten Funktionspläne zu konservieren und für die verschiedensten Zielplattformen wieder zu verwenden, ohne dass dabei jedes mal bei der Portierung eine zeitaufwendige Überarbeitung stattfinden muss.

Die ersten Funktionspläne bilden daher eine Migrationsbasis für ein zu portierendes Softwareprogramm, wobei in einem anschließenden Schritt der oder die plattformspezifischen Funktionspläne (zweite Funktionspläne) generiert werden. Hierdurch wird insbesondere eine mehrfache Erstellung und Pflege von Mustervorlagen und Standards vermieden.

In einer vorteilhaften Ausgestaltung der Erfindung wird im Schritt 2 zumindest ein plattformunabhängiger Port und/oder Parameter und/oder Funktionsbaustein des ersten Funktionsplans überführt in mindestens einen plattformabhängigen weiteren Port und/oder weiteren Parameter und/oder weiteren Funktionsbaustein des zweiten Funktionsplans.

Bei diesem Schritt eines erfindungsgemäßen Verfahrens findet die Anpassung der allgemein, technologiebezogenen Lösung an die spezifischen Anforderungen der Zielplattform statt. Dazu werden allgemeine, technologiebezogene Schnittstellen/Anschlüsse (Ports) und/oder Parameter und/oder Funktionsbausteine umgesetzt in die entsprechenden weiteren Elemente, welche die systemspezifischen, also plattformabhängigen, Funktionalitäten der Zielplattform beinhalten. Dabei handelt es sich beispielsweise um Funktionalitäten auf Treiberebene, wie beispielsweise Kommunikationsfunktionen und Funktionen für den Zugriff auf die Ein- und Ausgabeperipherie. Etwaig vorhandene spezielle Bussysteme können dabei ebenfalls umfasst sein.

Dabei ist es vorteilhaft, wenn in der EDV-Anlage mindestens eine Regelbasis hinterlegt ist, mittels welcher der mindestens eine Port und/oder Parmameter und/oder Funktionsbaustein in den weiteren Port und/oder weiteren Parameter und/oder weiteren Funktionsbaustein überführt wird.

Da die speziellen Erfordernisse der Zielplattform als Rahmenbedingungen festgelegt sind, sobald die gewünschte Zielplattform ausgewählt ist, bereitet es keine Schwierigkeiten, im ersten Funktionsplan definierte allgemeine Elemente überzuführen in entsprechende plattformgebundene Elemente. Beispielsweise können allgemein definierte Ein- und/oder Ausgänge des ersten Funktionsplans beim Übergang auf den zweiten Funktionsplan durch das regelbasierte Hinzufügen einer konkreten Ein- und/oder Ausleseadresse an die gewählte Zielplattform angepasst werden. Des Weiteren können beispielsweise für einen Funktionsbaustein des ersten Funktionsplans, welcher einen allgemeinen PID-Regelungsalgorithmus beschreibt, der entsprechende plattformspezifische Funktionsbaustein des zweiten Funktionsplans ausgewählt werden. So ist es möglich, dass der im ersten Funktionsplan mit allgemeinen Ein- und Ausgängen versorgte Regelungsalgorithmus letztendlich im Wesentlichen automatisch überführt werden kann in einen entsprechenden, auf der Zielplattform ablauffähigen Regelungsalgorithmus, welcher nun mit konkret adressierten Eingangswerten versorgt ist und konkret adressierte Ausgangswerte liefert. Dem weiteren Funktionsbaustein des zweiten Funktionsplans ist dabei vorteilhaft auf der Zielplattform ablauffähiger Programmcode zugeordnet, der aus einer Datenbank oder Bibliothek ausgewählt und mit den genannten konkret adressierten Eingangswerten versorgt wird, so dass die genannten konkret adressierten Ausgangswerte mittels des weiteren Funktionsbausteins erzeugbar sind.

Um mit genügender Genauigkeit aus plattformunabhängigen, technologischen Elementen entsprechende plattformspezifische weitere Elemente der weiteren Funktionspläne erzeugen zu können, sollten die verwendeten Elemente weitgehend harmonisiert sein, d.h. die entsprechenden Funktionsbausteine sowie Ports und Parmameter sollten über einfache Regeln aufeinander abbildbar sein.

Die Erfindung führt weiterhin zu einer EDV-basierten Vorrichtung zur Portierung von Softwareprogrammen auf eine Zielplattform umfassend folgende Komponenten:
- eine Einleseeinheit, mittels welcher ein plattformunabhängiger, technologischer erster Funktionsplan, welcher eine mittels eines Softwareprogramms zu bearbeitende Aufgabe beschreibt, in die Vorrichtung einlesbar ist,
- eine Speichereinheit, in welcher eine Regelbasis zur Umsetzung mindestens eines plattformunabhängigen Ports und/oder eines Parameters und/oder eine Funktionsbausteins des ersten Funktionsplans in mindestens einen weiteren Port und/oder weiteren Parameter und/oder weiteren Funktionsbaustein eines zweiten Funktionsplans speicherbar ist, und
- eine Verarbeitungseinheit zur Erzeugung des zweiten Funktionsplans, wobei der zweite Funktionsplan an spezifische Anforderungen der Zielplattform angepasst ist.

Vorteilhaft umfasst die Regelbasis dabei Vorschriften, mittels welcher der plattformunabhängige, technologische erste Funktionsplan in den zweiten Funktionsplan transformierbar ist.

In einer weiteren bevorzugten Ausführungsform umfasst eine erfindungsgemäße Vorrichtung weiterhin eine Kodierungseinheit, mittels welcher das Softwareprogramm für die Zielplattform mittels des zweiten Funktionsplans erstellbar ist.

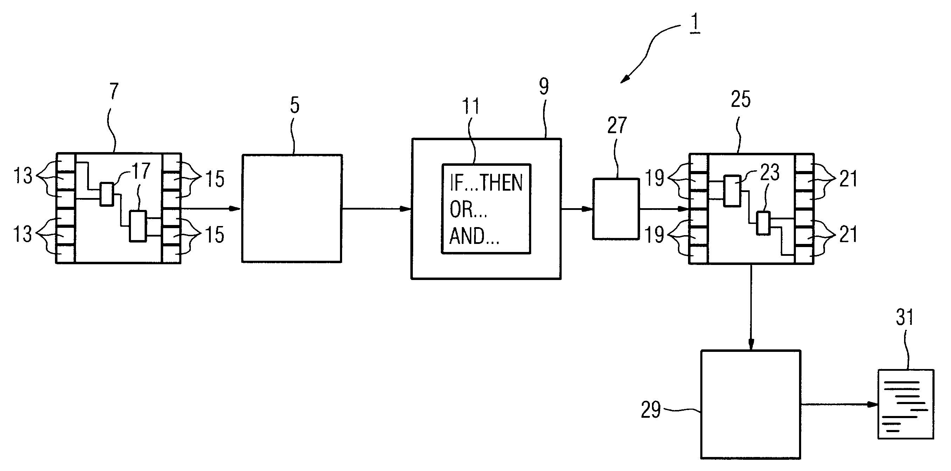

In der Figur ist ein Ausführungsbeispiel näher dargestellt.

Es zeigt:
FIG eine erfindungsgemäße Vorrichtung.
Die Vorrichtung 1 umfasst eine Einleseeinheit 5, welcher ein erster Funktionsplan 7 zugeführt wird. Dieser erste Funktionsplan beschreibt in allgemeiner, von einer speziellen Zielplattform lösgelösten Form eine technische Aufgabe, die von einem Softwareprogramm 31 auf der Zielplattform zu bearbeiten ist. Der erste Funktionsplan 7 kann dabei beispielsweise als Ausdruck auf Papier vorliegen, welcher von der Einleseeinheit 5 eingescannt wird oder als elektronisch lesbare Datei.
Die Vorrichtung 1 umfasst weiterhin eine Speichereinheit 9 mit einer Regelbasis 11. Diese enthält Vorschriften zur Transformierung von Ports 13;15, Parametern und Funktionsbausteinen 17 des ersten Funktionsplans 7 in weitere Ports 19;21, weitere Parameter und weitere Funktionsbausteine 23 eines zweiten Funktionsplans 25, wobei in der Regelbasis 11 die speziellen Erfordernisse der Zielplattform berücksichtigt sind, also beispielsweise auf welche konkreten Adressen der Ports 19;21 des zweiten Funktionsplans 25 die allgemein definierten Ports 13;15 des ersten Funktionsplans 7 abgebildet werden sollen, damit ein Softwareprogramm 31 auf der Zielplattform ablaufen kann, welches eine konkrete softwaretechnische Realisierung der allgemeinen technologischen Lösung, beschrieben durch den ersten Funktionsplan 7, darstellt.
Weiterhin ist eine Verarbeitungseinheit 27 vorgesehen, um den zweiten Funktionsplan 25 mittels der Regelbasis 11 und des ersten Funktionsplans 7 zu generieren. Der zweite Funktionsplan 25 stellt in graphischer Form das Softwareprogramm 31 dar, welches auf der Zielplattform ablauffähig ist.
In der Figur ist zur Umsetzung des zweiten Funktionsplans 25 in das auf der Zielplattform ablauffähige Softwareprogramm 31 schließlich eine Kodierungseinheit 29 vorgesehen, mittels welcher die Elemente des zweiten Funktionsplans 25 in entsprechende softwaretechnische Komponenten umgesetzt werden. Dazu kann die Kodierungseinheit 29 beispielsweise den weiteren Funktionsbausteinen 23 entsprechende, auf der Zielplattform ablauffähige Abschnitte an Softwarecode aus einer Datenbank oder Bibliothek auswählen und entsprechend den im zweiten Funktionsplan 25 enthaltenen Verschaltungsvorschriften datentechnisch zusammenführen.

## Patentansprüche

1. Verfahren zur Portierung von Softwareprogrammen auf eine Zielplattform mittels einer EDV-Anlage,
mit folgenden Schritten:
a) Für eine mittels eines Softwareprogramms (31) zu bearbeitende Aufgabe wird ein plattformunabhängiger, technologischer Funktionsplan als ein erster Funktionsplan (7) erstellt,
b) mittels des ersten Funktionsplans (7) wird ein zweiter Funktionsplan erstellt (25), welcher an spezifische Anforderungen der Zielplattform angepasst ist, und
b) mittels des zweiten Funktionsplans (25) wird das Softwareprogramm (31) für die Zielplattform erzeugt.

2. Verfahren nach Anspruch 1,
**dadurch gekennzeichnet, dass**
im Schritt b) zumindest ein plattformunabhängiger Port (13,15) und/oder Parameter und/oder Funktionsbaustein (17) des ersten Funktionsplans (7) überführt wird in mindestens einen plattformabhängigen weiteren Port (19,21) und/oder weiteren Parameter und/oder weiteren Funktionsbaustein (23) des zweiten Funktionsplans (25).

3. Verfahren nach Anspruch 2,
**dadurch gekennzeichnet, dass**
in der EDV-Anlage mindestens eine Regelbasis (11) hinterlegt ist, mittels welcher der mindestens eine Port (13,15) und/oder Parameter und/oder Funktionsbaustein (17) in den weiteren Port (19,21) und/oder weiteren Parameter und/oder Funktionsbaustein (23) überführt wird.

4. EDV-basierte Vorrichtung (1) zur Portierung von Softwareprogrammen auf eine Zielplattform,
**gekennzeichnet durch**
• eine Einleseeinheit (5), mittels welcher ein plattformunabhängiger, technologischer erster Funktionsplan (7), welcher eine mittels eines Softwareprogramms (31) zu bearbeitende Aufgabe beschreibt, in die Vorrichtung einlesbar ist,
• eine Speichereinheit (9), in welcher eine Regelbasis (11) zur Umsetzung mindestens eines plattformunabhängigen Ports (13,15) und/oder eines Parameters und/oder eines Funktionsbausteins (17) des ersten Funktionsplans (7) in mindestens einen weiteren Port (19,21) und/oder weiteren Parameter und/oder weiteren Funktionsbaustein (23) eines zweiten Funktionsplans (25) speicherbar ist, und
• eine Verarbeitungseinheit (27) zur Erzeugung des zweiten Funktionsplans (25), wobei der zweite Funktionsplan (25) an spezifische Anforderungen der Zielplattform angepasst ist.

5. Vorrichtung (1) nach Anspruch 4,
**dadurch gekennzeichnet, dass**
die Regelbasis (11) Vorschriften umfasst, mittels welcher der plattformunabhängige, technologische erste Funktionsplan (7) in den zweiten Funktionsplan (25) transformierbar ist.

6. Vorrichtung (1) nach Anspruch 4 oder 5,
**dadurch gekennzeichnet, dass**
weiterhin eine Kodierungseinheit (29) vorgesehen ist, mittels welcher das Softwareprogramm (31) für die Zielplattform mittels des zweiten Funktionsplans (25) erstellbar ist.
